(19) Europäisches Patentamt

European Patent Office

Office européen des brevets

(11) **EP 2 440 634 B1**

(12) **FASCICULE DE BREVET EUROPEEN**

(45) Date de publication et mention de la délivrance du brevet:
**13.07.2016 Bulletin 2016/28**

(21) Numéro de dépôt: **10723647.3**

(22) Date de dépôt: **18.05.2010**

(51) Int Cl.:
*C10G 2/00* (2006.01)        *B01J 23/75* (2006.01)
*C07C 1/04* (2006.01)

(86) Numéro de dépôt international:
**PCT/FR2010/000378**

(87) Numéro de publication internationale:
**WO 2010/142863 (16.12.2010 Gazette 2010/50)**

(54) **METHODE POUR OPTIMISER LE FONCTIONNEMENT D'UNE UNITE DE SYNTHESE D'HYDROCARBURES A PARTIR DE GAZ DE SYNTHESE PAR CONTROLE DE LA PRESSION PARTIELLE EN CO**

VERFAHREN ZUR OPTIMIERUNG DES BETRIEBS EINER EINHEIT FÜR DIE SYNTHESE VON KOHLENWASSERSTOFFEN AUS EINEM SYNTHESEGAS MITTELS STEUERUNG DES CO-TEILDRUCKS

METHOD FOR OPTIMIZING THE OPERATION OF A UNIT FOR THE SYNTHESIS OF HYDROCARBONS FROM SYNTHETIC GAS BY CONTROLLING THE PARTIAL CO PRESSURE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **10.06.2009  FR 0902801**

(43) Date de publication de la demande:
**18.04.2012  Bulletin 2012/16**

(73) Titulaire: **IFP Énergies nouvelles**
**92852 Rueil-Malmaison Cedex (FR)**

(72) Inventeurs:
• **MARION, Marie-Claire**
**69390 Vernaison (FR)**
• **TASSO, Andréa**
**IT-ZELO Buon Persico(lo) (IT)**
• **CORNARO, Ugo**
**26068 Seriate (bg) (IT)**

(56) Documents cités:
**WO-A1-03/068715        WO-A1-2005/123882
WO-A1-2008/065268**

## Description

La présente invention se rapporte au domaine de la synthèse d'hydrocarbures à partir d'un mélange comprenant du monoxyde de carbone (CO), de l'hydrogène ($H_2$) et éventuellement du dioxyde de carbone ($CO_2$), généralement appelé gaz de synthèse.

La méthode selon l'invention permet d'optimiser le fonctionnement d'une unité de synthèse d'hydrocarbures à partir de gaz de synthèse, cette synthèse étant connue sous le nom de synthèse Fischer-Tropsch.

Le procédé selon l'invention est un procédé de contrôle de la synthèse Fischer-Tropsch dans lequel on utilise la pression partielle en monoxyde de carbone, éventuellement associée au rapport des pressions partielles d'eau et d'hydrogène $P_{H2O}:P_{H2}$ et/ou à la pression partielle d'eau dans la section réactionnelle, comme paramètre(s) de contrôle de la synthèse Fischer-Tropsch.

## Etat de la technique antérieure

La réaction de conversion du gaz de synthèse (mélange CO-($CO_2$-$H_2$) en hydrocarbures est connue depuis le début du vingtième siècle et est communément appelée synthèse Fischer-Tropsch. Des unités ont été opérées en Allemagne pendant la seconde guerre mondiale, puis en Afrique du Sud afin de synthétiser des carburants synthétiques. Selon l'origine du gaz de synthèse, (charbon, gaz naturel) et/ou les produits désirés, on utilise des catalyseurs à base de fer ou de coblat.

Récemment, un nouvel intérêt s'est manifesté envers ces synthèses, et plus particulièrement envers l'utilisation de catalyseurs comprenant du cobalt qui permettent d'orienter la réaction vers la formation d'hydrocarbures plus lourds, principalement paraffiniques, essentiellement des hydrocarbures C5+ (hydrocarbures comprenant 5 atomes de carbone ou plus par molécule), tout en minimisant la formation de méthane et d'hydrocarbures ayant entre 2 et 4 atomes de carbone par molécule ($C_2$-$C_4$). Les hydrocarbures ainsi formés peuvent être transformés dans une unité d'hydrocraquage en aval, afin de produire majoritairement du kérosène et du gasoil. Un tel procédé est par exemple décrit dans le brevet EP-B-1 406 988. L'utilisation de catalyseurs comprenant du cobalt est plus adaptée que les catalyseurs comprenant du fer pour traiter des gaz de synthèse (charge) riches en hydrogène ($H_2$/CO de l'ordre de 2), issu de la transformation de gaz naturel notamment.

De nombreuses formulations catalytiques à base de cobalt ont été décrites dans l'art antérieur. Les demandes de brevet EP-A-0 313 375 ou EP-A-1 233 011 décrivent des catalyseurs Fischer-Tropsch spécifiques : la demande de brevet EP 0.313.375 décrit un catalyseur pour la conversion du gaz de synthèse en hydrocarbures comprenant des quantités catalytiquement actives de cobalt et des quantités relativement moindres de rhénium combinées sur un support d'alumine ; la demande de brevet EP 1.233.011 décrit un catalyseur mis en oeuvre dans un procédé de synthèse d'hydrocarbures à partir d'un mélange comprenant du CO et de l'$H_2$ , ledit catalyseur comprenant au moins un métal du groupe VIII supporté sur une silice-alumine préparée par coprécipitation et calicnée à une température comprise entre 500 et 1200°C pendant au moins 6 heures de manière à ce que ladite silice-alumine présente une surface spécifique inférieure à 260 $m_2$/g. Contrairement aux catalyseurs à base de fer qui sont actifs dans la réaction de conversion du CO en $CO_2$ (water gas shift reaction ou WGSR selon la terminologie anglo-saxonne) qui s'écrit $CO + H_2O \rightarrow CO_2 + H_2$, les catalyseurs à base de cobalt ne présentent que très peu d'activité pour cette réaction (B.H. Davis, Catalysis Today, 84, 2003, p.83).

Les catalyseurs Fischer-Tropsch contenant du cobalt, généralement pré-réduits, subissent, avant la phase de fonctionnement / d'opération de synthèse Fischer - Tropsch proprement dite, une phase ultime de transformation lors de leur première mise en oeuvre en présence de gaz de synthèse. Ainsi le catalyseur Fischer-Tropsch au cobalt termine sa "construction" *in situ,* sous gaz de synthèse, lors d'une phase dite phase de démarrage de l'unité Fischer-Tropsch. Cette étape de "fin de construction" du catalyseur Fischer-Tropsch, durant la phase de démarrage, est réalisée par chimisorption des espèces réactives, notamment par chimisorption de CO présent dans le gaz de synthèse, sur les sites catalytiques de cobalt (H. Schulz et al. Catal. Today 71, 2002, 351-360). La phase de démarrage est effectuée dans des conditions contrôlées afin de permettre la finition du catalyseur et de ne pas l'endommager. La demande de brevet WO 03/068715 enseigne la mise en oeuvre d'une procédure de démarrage d'un procédé Fischer-Tropsch préalablement à la phase de fonctionnement/d'opération du réacteur Fischer-Tropsch.

La rentabilité d'un procédé Fischer-Tropsch dépend fondamentalement de l'ensemble des performances du catalyseur employé pour la mise en oeuvre de la synthèse Fischer-Tropsch, à savoir de l'activité et de la sélectivité dudit catalyseur qui déterminent sa productivité en produits lourds généralement recherchés pour maximiser le rendement en carburant diesel de grande qualité et de la stabilité dudit catalyseur qui détermine les appoints en catalyseur ou fréquence de remplacement du catalyseur, soit le coût catalyseur du procédé.

La part du coût catalyseur dans le procédé de synthèse Fischer-Tropsch est non négligeable dans le coût global du procédé (ref. Catal. Today, A. Brumby et al. Catal. Today, vol. 106, 2005, 166-169). Par conséquent, toute amélioration de la durée de vie du catalyseur, fonction de la stabilité du catalyseur, est primordiale.

La stabilité du catalyseur Fischer-Tropsch dépend à la fois de ses propriétés intrinsèques (caractéristiques du support, mode de préparation...) et des conditions dans lesquelles il est mis en oeuvre. Ainsi, le brevet US 6.262.132 et les demandes de brevets WO 99/42214 et WO 03/012008 décrivent l'utilisation de catalyseurs améliorés, plus résistants à l'attrition ou à la perte de la phase active. Ces améliorations sont apportées par l'utilisation de support stabilisé, ou promoteur. D'autre part, il est connu que les conditions de synthèse Fischer-Tropsch sont sévères et peuvent donner lieu à des conditions de pression partielle d'eau assez importante ; ces conditions peuvent alors entraîner la désactivation du catalyseur Fischer-Tropsch par oxydation du cobalt métallique (phase active), notamment; lorsque ledit catalyseur est à base de cobalt (ref. P.J. van Berge et al., Catal. Today, 58, 321-334, 2000 - A.M. Hilmen et al., Appl. Catal., 186, 169-188, 1999).

Aussi, les risques de désactivation du catalyseur Fischer-Tropsch et la part non négligeable du coût catalyseur dans la mise en oeuvre du procédé ont conduit à rechercher à améliorer les performances du catalyseur, notamment par une amélioration de la stabilité du catalyseur en vue d'augmenter la durée de vie du catalyseur.

**Résumé de l'invention**

La méthode selon l'invention est une méthode pour optimiser le fonctionnement d'une unité de synthèse d'hydrocarbures à partir d'une charge comprenant du gaz de synthèse, dans laquelle on opère en présence d'au moins un catalyseur comprenant du cobalt.

La méthode selon l'invention s'applique à un procédé de synthèse d'hydrocarbures à partir d'une charge comprenant du gaz de synthèse, opéré avec au moins un catalyseur comprenant du cobalt. Ladite méthode comprend les étapes suivantes : la détermination de la pression partielle en monoxyde de carbone CO théorique dans la section réactionnelle suivi d'un ajustement éventuel de ladite pression puis de la détermination de la nouvelle valeur de la pression partielle en CO pour s'assurer qu'elle a atteint une valeur supérieure ou égale à 4 bar (1 bar = 0,1 MPa), de préférence supérieure ou égale à 4,5 bar et de façon très préférée supérieure ou égale à 4,8 bar.

Ladite méthode selon l'invention comprend également préférentiellement le contrôle du rapport $P_{H2O}:P_{H2}$ dans la section réactionnelle et/ou le contrôle de la pression partielle d'eau dans la section réactionnelle de synthèse Fischer-Tropsch. De manière très préférée, la méthode selon l'invention est effectuée dans des conditions telles que la pression partielle en monoxyde de carbone est supérieure ou égale à 4 bar dans la section réactionnelle, le rapport $P_{H2O}:P_{H2}$ présente une valeur inférieure ou égale à 0,8 et la pression partielle d'eau soit maintenue en deçà d'une valeur critique $ppH_2O_{limit.}$ définie dans la suite de la présente description et dépendante du diamètre moyen des pores du catalyseur Fischer-Tropsch, de la température de la section réactionnelle et de la pression de vapeur saturante de l'eau à la température de réaction.

La méthode de contrôle de la synthèse Fischer-Tropsch selon l'invention conduit, de manière surprenante, à une amélioration sensible de l'activité du catalyseur et en conséquence de la stabilité du catalyseur lorsque la pression partielle en monoxyde de carbone dans la section réactionnelle de synthèse Fischer-Tropsch atteint une valeur supérieure ou égale à 4 bar, de préférence supérieure ou égale à 4,5 bar et de manière très préférée supérieure ou égale à 4,8 bar. Il en résulte une diminution de la fréquence de remplacement du catalyseur dans ladite section réactionnelle et en conséquence une diminution de la part du coût de la synthèse Fischer-Tropsch représenté par le coût catalyseur.

**Description détaillée de l'invention**

La présente invention a pour objet une méthode selon la revendication 1 pour optimiser le fonctionnement d'une section réactionnelle de synthèse d'hydrocarbures à partir d'une charge comprenant du gaz de synthèse, dans laquelle on opère en présence d'au moins un catalyseur comprenant du cobalt, ladite méthode comprenant les étapes suivantes :

a) Détermination de la pression partielle en monoxyde de carbone CO théorique dans la section réactionnelle,
b) Ajustement éventuel de la pression partielle en CO déterminée à l'étape a) à une valeur supérieure ou égale à 4 bar à l'aide d'au moins un moyen sélectionné parmi les moyens décrits ci-après,
c) Détermination de la nouvelle valeur de la pression partielle en CO théorique dans la section réactionnelle pour s'assurer qu'elle a atteint une valeur supérieure ou égale à 4 bar.

La méthode selon l'invention est une méthode de contrôle et d'optimisation de la synthèse Fischer-Tropsch dans laquelle on utilise notamment la pression partielle en monoxyde de carbone dans la section réactionnelle de synthèse Fischer-Tropsch comme paramètre de contrôle et d'optimisation de cette synthèse. La méthode selon l'invention permet d'améliorer le fonctionnement de la section réactionnelle de synthèse Fischer-Tropsch en augmentant la durée de vie du catalyseur.

La présente invention vise la synthèse d'un mélange d'hydrocarbures préférentiellement formé de composés à longue chaîne carbonée, c'est-à-dire de composés hydrocarbonés ayant plus de 5 atomes de carbone par molécule et préférentiellement ayant plus de 20 atomes de carbone par molécule, en présence d'au moins un catalyseur comprenant du cobalt. Les hydrocarbures formés sont majoritairement des paraffines. Cette synthèse est réalisée à partir de gaz de synthèse comprenant du monoxyde de carbone et de l'hydrogène et éventuellement du dioxyde de carbone : il s'agit de la synthèse Fischer-Tropsch.

Conformément à l'invention, la section réactionnelle pour la mise en oeuvre de la synthèse Fischer-Tropsch est munie d'au moins un catalyseur comprenant du cobalt mis en oeuvre soit en lit fixe soit dans un réacteur triphasique (mise en oeuvre en "slurry" selon la terminologie anglo-saxonne) soit encore dans un réacteur parfaitement agité. S'agissant d'une mise en oeuvre en lit fixe, ledit lit fixe est pourvu de un ou plusieurs lits de catalyseur. S'agissant d'une mise en oeuvre dans un réacteur triphasique, le catalyseur se trouve en suspension dans une phase liquide essentiellement inerte et dans la phase gazeuse réactive constituée par la charge (gaz de synthèse).

Conformément à l'invention, le gaz de synthèse utilisé pour la mise en oeuvre de la synthèse Fischer-Tropsch peut être obtenu via la transformation du gaz naturel, du charbon ou de la biomasse par des procédés tels que le vaporeformage ou l'oxydation partielle, ou encore via la décomposition du méthanol, ou à partir de tout autre procédé connu de l'homme du métier. Toute charge comprenant au moins de l'hydrogène et du monoxyde de carbone peut donc convenir. Le gaz de synthèse utilisé pour la mise en oeuvre de la synthèse Fischer-Tropsch présente un rapport molaire $H_2$:CO compris entre 1:2 et 5:1, de manière plus préférée entre 1,2:2 et 3:1 et de manière plus préférée entre 1,5:1 et 2,6:1. Le gaz de synthèse comprend généralement, outre de l'hydrogène et du monoxyde de carbone, une faible proportion de dioxyde de carbone ($CO_2$) de préférence moins de 15% en volume et de manière préférée moins de 10% en volume.

La synthèse Fischer-Tropsch est mise en oeuvre sous une pression totale comprise entre 1 MPa et 10 MPa et de manière plus préférée comprise entre 1,5 MPa et 5 MPa. La vitesse volumétrique horaire du gaz de synthèse est généralement comprise entre 100 et 40000 $h^{-1}$ (volume de gaz de synthèse par volume de catalyseur et par heure), de préférence entre 400 est 20000 $h^{-1}$.

Conformément à l'invention, tout catalyseur comprenant du cobalt, connu de l'homme du métier, convient pour la mise en oeuvre de la synthèse Fischer-Tropsch. En particulier, les catalyseurs décrits dans les demandes de brevet EP 1.233.011 et EP 0.313.375, mentionnées dans la partie "Etat de la technique antérieure" de cette demande de brevet, sont adaptés pour la mise en oeuvre de la synthèse Fischer-Tropsch. On utilise de préférence des catalyseurs comprenant du cobalt déposé sur un support sélectionné parmi les oxydes suivants : alumine, silice, zircone, oxyde de titane, oxyde de magnésium ou leurs mélanges. De manière préférée, ledit support est constitué d'alumine. Différents promoteurs connus de l'homme du métier peuvent également être ajoutés, notamment ceux sélectionnés parmi les éléments suivants : rhénium, ruthénium, molybdène, tungstène, chrome. Il est également possible d'ajouter au moins un métal alcalin ou un métal alcalino-terreux à ces formulations catalytiques.

Selon l'invention, la méthode pour optimiser le fonctionnement d'une section réactionnelle mettant en oeuvre la synthèse Fischer-Tropsch comprend au moins les étapes de contrôle suivantes:

a) Détermination de la pression partielle en monoxyde de carbone CO théorique dans la section réactionnelle,
b) Ajustement éventuel de la pression partielle en CO déterminée à l'étape a) à une valeur supérieure ou égale à 4 bar dans la section réactionnelle,
c) Détermination de la nouvelle valeur de la pression partielle en CO théorique dans la section réactionnelle pour s'assurer qu'elle a atteint une valeur supérieure ou égale à 4 bar.

La détermination de la pression partielle en monoxyde de carbone CO théorique selon ladite étape a) de la méthode de l'invention peut être réalisée par tout moyen connu de l'homme du métier. En particulier, la pression partielle en CO théorique est déterminée, conformément à ladite étape a), à partir de la composition molaire de la phase gazeuse dans la section réactionnelle et de la pression totale au sein de la section réactionnelle. La pression partielle en CO théorique est alors définie comme suit : $Pp_{CO} = (x_{(CO)} / \Sigma x_i) * P_T$, avec $x_{(CO)}$= fraction molaire de CO dans la phase gazeuse dans la section réactionnelle ; $x_i$ = fraction molaire des composés gazeux i dans la phase gazeuse dans la section réactionnelle ($\Sigma x_i = 1$); $P_T$ : pression totale (bar) dans la section réactionnelle. La fraction molaire des composés gazeux i est aisément déterminée par analyse chromatographique en phase gazeuse. Les composés gazeux i sont tous les composés gazeux présents dans la section réactionnelle, en particulier l'hydrogène et le monoxyde de carbone non convertis et les produits légers de la réaction de synthèse Fischer-Tropsch. La pression partielle en CO est maximale à l'entrée du réacteur, c'est-à-dire lorsque la fraction molaire de CO présent dans la charge est maximale (conversion en CO nulle).

La pression partielle en CO théorique peut être également déterminée, par calcul, à partir des données de base de la synthèse Fischer-Tropsch réalisée (notamment ratio $H_2$/CO de la charge, teneur en CO et $H_2$ dans la charge, taux de conversion du CO, distribution des produits et sélectivité en $CO_2$) et d'un calcul de flash (répartition des produits en phase gaz et liquide) par exemple. Le calcul de la pression partielle en CO théorique est aisé pour un homme du métier disposant d'un bilan matière complet.

Le taux de conversion du monoxyde de carbone (Cv) est défini à partir des mesures quantitatives du monoxyde de carbone entrant dans la section réactionnelle de synthèse d'hydrocarbures (CO entrée) et du monoxyde de carbone sortant de ladite section réactionnelle (CO sortie). Ces mesures sont réalisées généralement par chromatographie en phase gazeuse au moyen d'un détecteur catharométrique. De la même façon, on mesure quantitativement l'hydrogène avec une colonne et un détecteur spécifiques dans les .flux gazeux entrant et sortant de la section réactionnelle de synthèse d'hydrocarbures afin de calculer les divers rapports molaires $H_2$/CO.

Conformément à la méthode de l'invention, l'étape b) consiste à ajuster, si besoin, la pression partielle en CO, déterminée à l'étape a), à une valeur supérieure ou égale à 4 bar dans la section réactionnelle. L'ajustement de la pression partielle en CO est effectué en utilisant au moins un moyen sélectionné parmi les moyens suivants :

1) l'augmentation de la pression totale dans la section réactionnelle de synthèse Ficher-Tropsch,
2) l'augmentation de la concentration en CO dans la charge, selon l'un et/ou l'autre des moyens 2.1) et 2.2) suivants :

    2.1) diminution des composés inertes dans la charge
    2.2) diminution du rapport molaire $H_2$/CO de la charge

3) diminution du taux de conversion de CO.

On rappelle que la pression partielle d'un composé gazeux i s'exprime de la manière suivante : Pp(i) = Xi * P (ou encore Pp(i) = Xi/$\Sigma$Xi * P sachant que $\Sigma$ Xi = 1) avec Xi = la fraction molaire du composé i dans la phase gazeuse dans la section réactionnelle et P la pression totale dans la section réactionnelle.

On rappelle également la définition de la fraction molaire en CO : X(CO) = n(CO) / $\Sigma$ n(i) où i représentent tous les composés gazeux présents dans la section réactionnelle, n(i) : nombre de mole du composé i dans la section réactionnelle et n(CO) : nombre de mole de CO dans la section réactionnelle.

Selon l'invention, l'ajustement de la pression partielle en CO par augmentation de la pression totale dans la section réactionnelle induit, dans les mêmes proportions, une augmentation de la pression partielle de chacun des composés gazeux présents dans la section réactionnelle, en particulier un augmentation de la pression partielle en CO.

L'ajustement de la pression partielle en CO par augmentation de la concentration en CO dans la charge correspond également à une augmentation de la fraction molaire en CO, de laquelle résulte une augmentation de la pression partielle en CO. L'augmentation de la fraction molaire en CO peut-être réalisée:

- 2.i) en modifiant les conditions opératoires de la section de production de gaz de synthèse située en amont de la section réactionnelle Fischer-Tropsch, pour soit diminuer la teneur en d'autres composés gazeux inertes dans la charge constituée de gaz de synthèse (moyen 2.1 décrit ci-dessus), soit augmenter la proportion de CO dans le gaz de synthèse en diminuant le rapport molaire $H_2$/CO du gaz de synthèse (moyen 2.2 décrit ci-dessus).
- 2.ii) en réduisant le taux de recyclage de l'effluent gaz issu de la section réactionnelle, et traité dans une ou plusieurs zones de séparation, vers l'entrée du réacteur dans le cas de la présence d'un recyclage interne dans l'unité de synthèse Fischer-Tropsch. On réduit alors la quantité de composés inertes recyclée et en conséquence le taux de composés inertes dans la charge à l'entrée de la section réactionnelle est réduit. Néanmoins cette action aura un effet sur le niveau de conversion de CO par passe du réacteur, (augmentation du taux de conversion par passe, c'est-à-dire augmentation du taux de conversion de CO mesuré entre l'entrée et la sortie de la section réactionnelle) qui pourra alors avoir un effet inverse sur la concentration en CO. Ce mode d'action n'est pas préféré.

L'ajustement de la pression partielle en CO par la diminution du taux de conversion de CO permet d'augmenter la teneur en CO résiduel dans la section réactionnelle donc par conséquent sa pression partielle. La diminution du taux de conversion de CO est réalisée par tout moyen influant sur la cinétique de réaction. On peut citer, par exemple, de manière non limitative :

- une diminution de la température de réaction (ralentissement de la cinétique de réaction selon la loi d'Arrhénius),
- une augmentation du débit de charge à l'entrée de la section réactionnelle (ralentissement de la cinétique de réaction par baisse du temps de contact réactif/catalyseur ou du temps de séjour des réactifs dans la section réactionnelle au contact du catalyseur).

Le choix de l'un des ces moyens dépend essentiellement des moyens disponibles sur l'unité industrielle et des conditions opératoires au moment du choix et des contraintes industrielles à respecter.

De manière très préférée, l'ajustement de la pression partielle en CO conformément à ladite étape b) de la méthode selon l'invention est réalisé par l'augmentation de la pression totale dans la section réactionnelle de synthèse Fischer-Tropsch ou par diminution des composés inertes dans la charge de manière à augmenter la concentration en CO dans la charge.

Conformément à la méthode d'optimisation selon l'invention, ladite étape b) d'ajustement de la pression partielle en CO est suivie d'une étape c) consistant à déterminer la nouvelle valeur de la pression partielle en CO théorique dans la section réactionnelle afin de contrôler qu'elle est supérieure ou égale à 4 bar, de préférence supérieure ou égale à 4,5 bar et de façon très préférée supérieure ou égale à 4,8 bar.

Conformément à l'étape c) de la méthode de l'invention, la pression partielle en CO théorique est déterminée de la même manière que la pression partielle en CO théorique déterminée pour la mise en oeuvre de l'étape a) de la méthode selon l'invention.

Selon l'invention, il est recherché une pression partielle en CO théorique dans la section réactionnelle à l'issue de l'étape c) supérieure ou égale à 4 bar, de préférence supérieure ou égale à 4,5 bar et de façon très préférée supérieure ou égale à 4,8 bar.

Selon un premier mode de réalisation préférée de la méthode d'optimisation selon l'invention, le paramètre essentiel de contrôle et d'optimisation de la synthèse Fischer-Tropsch consistant en l'application d'une valeur minimale de la pression partielle en CO dans la section réactionnelle est associé à un paramètre supplémentaire de contrôle et d'optimisation de la synthèse Fischer-Tropsch consistant à opérer au sein de ladite section réactionnelle dans des conditions telles que le rapport des pressions partielles d'$H_2O$ et d'$H_2$, noté rapport $P_{H2O}:P_{H2}$, présente une valeur inférieure ou égale à 0,8, de préférence inférieure ou égale à 0,75 et de manière très préférée inférieure ou égale à 0,7. Ledit rapport $P_{H2O}:P_{H2}$ correspond également au rapport molaire $H_2O/H_2$, lequel présente une valeur inférieure ou égale à 0,8, de préférence inférieure ou égale à 0,75 et de manière très préférée inférieure ou égale à 0,7.

Conformément audit premier mode de réalisation préférée de la méthode d'optimisation selon l'invention, ladite méthode comprend, outre les étapes a) à c) décrites ci-dessus, les étapes de contrôle suivantés :

e) Détermination du rapport $P_{H2O}:P_{H2}$ théorique dans la section réactionnelle,
f) Ajustement éventuel du rapport $P_{H2O}:P_{H2}$ déterminé à l'étape e) à une valeur inférieure ou égale à 0,8,
g) Détermination de la nouvelle valeur du rapport $P_{H2O}:P_{H2}$ théorique dans la section réactionnelle pour contrôler que ledit rapport présente une valeur inférieure ou égale à 0,8.

La détermination du rapport $P_{H2O}:P_{H2}$ selon l'étape e) de la méthode de l'invention, conformément audit premier mode de réalisation préférée, peut être réalisée à l'aide de tout moyen connu de l'homme du métier. L'étape e) est de préférence réalisée en utilisant un moyen sélectionné parmi les moyens détaillés ci-après.

Un moyen préféré de détermination du rapport $P_{H2O}:P_{H2}$ théorique dans la section réactionnelle, selon ladite étape e), consiste à mesurer la quantité de monoxyde de carbone dans l'effluent gazeux issu de la section réactionnelle et estimer le rapport $P_{H2O}:P_{H2}$ théorique à partir du taux de conversion du monoxyde de carbone dans l'ensemble de la section réactionnelle comprenant un ou plusieurs réacteurs, du rapport $H_2:CO$ dans la charge et du rapport $H_2:CO$ du gaz consommé par la réaction (également nommé rapport d'usage).

Le taux de conversion du monoxyde de carbone (Cv) est défini à partir des mesures quantitatives du monoxyde de carbone entrant dans la section réactionnelle de synthèse d'hydrocarbures (CO entrée) et du monoxyde de carbone sortant de ladite section réactionnelle (CO sortie). Ces mesures sont réalisées généralement par chromatographie en phase gazeuse au moyen d'un détecteur catharométrique. De la même façon, on mesure quantitativement l'hydrogène avec une colonne et un détecteur spécifiques dans les flux gazeux entrant et sortant de la section réactionnelle de synthèse d'hydrocarbures afin de calculer les divers rapports $H_2/CO$.

On définit donc le taux de conversion du monoxyde de carbone (Cv), le ratio (ou rapport $H_2/CO$) de la charge (R1) et le ratio (ou rapport $H_2/CO$) d'usage (Rft) de la manière suivante :

$$Cv = (CO_{\text{entrée}} - CO_{\text{sortie}}) / CO_{\text{entrée}}$$

$$R1 = H_2/CO_{(\text{charge})} = H_{2\,(\text{entrée})} / CO_{(\text{entrée})} \, (\text{mol/mol})$$

$$Rft = H_2/CO_{(\text{réaction})} = (H_{2\,(\text{entrée})} - H_{2\,(\text{sortie})}) / (CO_{\text{entrée}} - CO_{\text{sortie}})$$

On peut alors estimer le rapport $P_{H2O}:P_{H2}$ théorique dans la section réactionnelle par le calcul suivant :

$$P_{H2O}:P_{H2} \text{ théorique} = Cv / (R1 - (Rft * Cv))$$

Le ratio d'usage Rft qualifie d'une certaine façon la sélectivité intrinsèque du catalyseur de synthèse Fischer-Tropsch.

Conformément audit premier mode de réalisation préférée de la méthode d'optimisation de l'invention, l'étape f) consiste à ajuster, si besoin, le rapport $P_{H2O}:P_{H2}$, déterminé à ladite étape e), à une valeur inférieure ou égale à 0,8. L'ajustement du rapport $P_{H2O}:P_{H2}$ est avantageusement effectué en utilisant au moins un moyen sélectionné parmi les moyens suivants:

4) augmentation du débit de charge,
5) augmentation du taux de recyclage dans le cas où la section réactionnelle ou au moins un réacteur de la section réactionnelle est équipé d'un recyclage du gaz de synthèse non converti,
6) élimination en continu de tout ou partie de l'eau formée par la réaction de synthèse Fischer-Tropsch,
7) modification du rapport $H_2/CO$ en entrée de la section réactionnelle de synthèse d'hydrocarbure ou d'au moins un réacteur de ladite section lorsqu'elle en compte plusieurs,
8) diminution de la température opératoire,
9) diminution de la pression totale.

De manière plus détaillée, cet ajustement du rapport $P_{H2O}:P_{H2}$ selon ladite étape f) peut être effectué en utilisant l'un des moyens suivants:

4) L'augmentation du débit de charge fraîche (gaz de synthèse) est un des moyens préférés. Il permet de réduire le temps de contact de la charge avec le catalyseur présent dans la section réactionnelle, donc de réduire le taux de conversion de CO par passe, c'est-à-dire le taux de conversion de CO mesuré entre l'entrée et la sortie de la section réactionnelle et par conséquent de réduire le rapport $P_{H2O}:P_{H2}$. En outre, cette augmentation du débit de charge présente l'avantage d'augmenter la productivité du procédé global Fischer-Tropsch.

5) L'augmentation du taux de recyclage du gaz de synthèse non converti, dans le cas où la section réactionnelle ou au moins un réacteur de ladite section est équipée d'un recyclage interne, compte parmi les moyens d'action préférés. Il engendre la diminution du taux de conversion du CO par passe, c'est-à-dire le taux de conversion de CO mesuré entre l'entrée et la sortie de la section réactionnelle, et par conséquent la diminution du rapport $P_{H2O}:P_{H2}$ dans la section réactionnelle.

6) Une autre méthode d'ajustement du rapport $P_{H2O}:P_{H2}$ selon ladite étape consiste à éliminer en continu tout ou partie de l'eau formée par la réaction de synthèse Fischer-Tropsch au moyen d'un dispositif de séparation implanté dans au moins un réacteur de synthèse Fischer-Tropsch ou dans une boucle de recyclage intégrée dans le procédé de synthèse Fischer-Tropsch. Une telle séparation peut par exemple être réalisée au moyen d'un ballon permettant de séparer la phase aqueuse et la phase organique dans une boucle de recyclage ou au moyen d'une membrane implantée dans cette boucle ou dans au moins un réacteur de synthèse.

7) Une autre méthode d'ajustement du rapport $P_{H2O}:P_{H2}$ selon ladite étape f) consiste à modifier le rapport $H_2/CO$ en entrée de la section réactionnelle de synthèse d'hydrocarbures ou d'au moins un réacteur de ladite section de synthèse d'hydrocarbures lorsqu'elle en compte plusieurs. La modification du rapport $H_2/CO$ en entrée est avantageusement obtenue selon au moins l'une des manières i) à iv) explicitées ci-après, lesquelles peuvent être réalisées indépendamment ou en combinaison :

i) Cette modification peut être obtenue en modifiant les conditions opératoires de la section de production de gaz de synthèse située en amont de la section réactionnelle Fischer-Tropsch, ce qui génère une modification du rapport $H_2/CO$ en sortie de cette section gaz de synthèse.
ii) L'apport de monoxyde de carbone supplémentaire à l'entrée de la section réactionnelle ou d'au moins un réacteur de ladite section conduit à diminuer le rapport $H_2/CO$ de la charge et à augmenter le débit total de la charge. Globalement les conditions cinétiques de la synthèse Fischer-Tropsch sont alors moins favorables et cela engendre une diminution du rapport $P_{H2O}:P_{H2}$. Toutefois, cette option n'est généralement pas l'option très préférée car elle est difficile à mettre en oeuvre industriellement. La disponibilité de quantités de CO supplémentaires nécessite en effet une action sur l'unité de production de gaz de synthèse avec modification du rapport $H_2/CO$ en sortie de cette unité.

iii) L'apport d'hydrogène ($H_2$) supplémentaire à l'entrée de la section réactionnelle de synthèse ou d'au moins un réacteur de ladite section lorsqu'elle en compte plusieurs est généralement plus facile à mettre en oeuvre industriellement en utilisant un flux supplémentaire d'hydrogène disponible sur le site. Cet apport conduit à l'augmentation du rapport $H_2/CO$ dans la charge entrant dans la section réactionnelle Fischer-Tropsch. Cet excès supplémentaire d'hydrogène engendre une diminution du rapport $P_{H2O}:P_{H2}$. Toutefois, cette option présente l'inconvénient de modifier la sélectivité intrinsèque de la réaction Fischer-Tropsch du fait de l'excès supplémentaire d'hydrogène dans la charge. Cette modification conduit à la formation plus importante de produits légers, notamment d'hydrocarbures $C_2$-$C_4$ et de méthane, indésirables. Ce moyen n'est donc pas un moyen préféré selon l'invention.

iv) Cette modification du rapport $H_2/CO$ en entrée peut également parfois être obtenue en modifiant les conditions de recyclage interne tel que détaillé précédemment en 5).

8) La diminution de la température conduit à un ralentissement de la cinétique de la réaction selon la loi d'Arrhenius. Par conséquent, la diminution de la température provoque une diminution du taux de conversion de CO et donc une diminution du rapport $P_{H2O}:P_{H2}$.

9) La diminution de pression totale dans la section réactionnelle a également un impact sur la cinétique de la réaction et conduit à une diminution du rapport $P_{H2O}:P_{H2}$ par diminution du niveau de conversion de CO.

Le choix d'au moins l'un de ces moyens choisis parmi les moyens 4) à 9) décrits ci-dessus dépend essentiellement des moyens disponibles sur l'unité industrielle et des conditions opératoires au moment du choix.

Les moyens très préférés pour la mise en oeuvre de ladite étape f) d'ajustement éventuel du rapport $P_{H2O}:P_{H2}$ sont en général les moyens 4) d'augmentation du débit de charge, 5) d'augmentation du taux de recyclage dans le cas où la section réactionnelle ou au moins un réacteur de ladite section est équipé(e) d'un recyclage du gaz non converti et 6) d'élimination en continu de tout ou partie de l'eau formée par la réaction. Dans certains cas, notamment après un incident sur une unité de synthèse Fischer-Tropsch tel que par exemple une baisse inopinée de la température opératoire, d'autres moyens sont préférentiellement appliqués pour la mise en oeuvre de ladite étape f) d'ajustement du rapport $P_{H2O}:P_{H2}$, en particulier la diminution de la température opératoire et la modification du rapport $H_2/CO$ en entrée de la section réactionnelle de synthèse Fischer-Tropsch. Dans de tels cas, lesdits moyens 7) et 8) sont en effet généralement plus faciles à mettre en oeuvre.

Après mise en oeuvre de ladite étape f), la nouvelle valeur théorique du rapport $P_{H2O}:P_{H2}$ est à nouveau déterminée conformément à ladite étape g) dudit premier mode de réalisation de la méthode de l'invention afin de contrôler que ledit rapport $P_{H2O}:P_{H2}$ présente, à l'issue de ladite étape g), une valeur inférieure ou égale à 0,8, de préférence inférieure ou égale à 0,75 et de manière très préférée inférieure ou égale à 0,7.

Selon un deuxième mode de réalisation préférée de la méthode d'optimisation selon l'invention, le paramètre essentiel de contrôle et d'optimisation de la synthèse Fischer-Tropsch consistant en l'application d'une valeur minimale de la pression partielle en CO dans la section réactionnelle est associé à un paramètre supplémentaire de contrôle et d'optimisation de la synthèse Fischer-Tropsch consistant à maintenir la pression partielle d'eau dans la section réactionnelle en deçà d'une valeur critique $PpH_2O_{limit.}$ définie par la formule [1] suivante :

$$PpH_2O_{limit.} = \exp\left(-7751/d_p \cdot T\right) \cdot P_s(T) \quad [1]$$

où T est la température de réaction en K,

$d_p$ est le diamètre moyen des pores du catalyseur en nm, déterminé par adsorption-désorption d'azote (méthode BJH, Barrett, Joymer et Halenda, The Journal of American Society" , 73, 373, (1951)),

$P_s(T)$ est la pression de vapeur saturante de l'eau à la température T, en bar

De préférence, la pression partielle d'eau dans la section réactionnelle est contrôlée et maintenue en deçà de la valeur $0,95.PpH_2O_{limit.}$. De manière plus préférée, celle-ci est contrôlée et maintenue en deçà de la valeur $0,9.PpH_2O_{limit}$ et de manière encore plus préférée, en deçà de la valeur $0,8.PpH_2O_{limit.}$.

La pression partielle d'eau dans la section réactionnelle est de préférence strictement inférieure à la pression partielle d'hydrogène. De manière plus préférée, la pression partielle d'eau dans la section réactionnelle est inférieure ou égale à 0,8 fois la pression partielle d'hydrogène et de manière encore plus préférée inférieure ou égale à 0,7 fois la pression partielle d'hydrogène. Dans ces conditions, les performances du procédé sont optimisées, notamment en terme de stabilité du catalyseur.

La température T (en Kelvin) figurant dans la formule [1] est celle de la section réactionnelle. Lorsque la section réactionnelle comporte plusieurs réacteurs opérant à des températures différentes, le contrôle de la pression partielle d'eau est effectué réacteur par réacteur. Ladite température est généralement comprise entre 100 et 500°C, de manière préférée entre 180 et 300°C.

Le diamètre moyen des pores $d_p$ du catalyseur présent dans la section réactionnelle ou dans au moins un réacteur de la section réactionnelle est déterminé à partir de la méthode BJH (Barrett, Joymer et Halenda, The Journal of American Society", 73, 373, (1951)) d'adsorption et désorption d'azote à 77 K. Il correspond à la valeur du rapport 4V/A, V étant le volume BJH désorbé et A l'aire des pores BJH à désorption, ladite méthode BJH étant bien connue de l'Homme du métier.

Pour les catalyseurs utilisés dans la synthèse Fischer-Tropsch au sens de la présente invention, ledit diamètre moyen est compris entre 0,1 et 100 nm, de préférence entre 1 et 50 nm (1nm = $10^{-9}$ m).

La pression de vapeur saturante de l'eau $P_s(T)$ figurant dans la formule [1] est donnée par les tables thermodynamiques bien connues de l'Homme du métier et est exprimée en bar (1 bar = $10^5$ Pa).

La pression partielle d'eau $Pp_{H2O}$ dans la section réactionnelle est déterminée, selon la définition de l'Homme du métier, à partir de la composition molaire de la phase gazeuse contenue dans la section réactionnelle et de la pression totale. La pression partielle d'eau est calculée à partir de la formule :

$$\text{calculée à partir de la formule : } Pp_{H2O} = (x_{H2O}/\Sigma x_i).P_T$$

où $x_{H2O}$ est la fraction molaire en eau dans la phase gazeuse dans la section réactionnelle,
$x_i$ est la fraction molaire en composé gazeux i et $\Sigma x_i = 1$
$P_T$ est la pression totale dans la section réactionnelle.

Généralement, la composition molaire de la phase gazeuse est déterminée par analyse chromatographique en phase gazeuse d'un échantillon prélevé à la sortie de la section réactionnelle. Tout autre moyen connu de l'Homme du métier est utilisable pour déterminer la composition de la phase gazeuse. Par exemple, elle peut être également obtenue par calcul à partir des données de bases de la réaction Fischer-Tropsch : ratio $H_2/CO$, taux de conversion en CO et de la distribution des produits. Le calcul est aisé pour un Homme du métier disposant d'un bilan matière complet.

Conformément audit deuxième mode de réalisation préférée de la méthode d'optimisation selon l'invention, la pression partielle d'eau dans la section réactionnelle est contrôlée en mettant en oeuvre au moins les étapes suivantes :

i) détermination de la valeur $PpH_2O_{limit}$ définie à partir de la formule [1] donnée ci-dessus dans les conditions de réaction, tenant compte de la température de la section réactionnelle et des propriétés du catalyseur utilisé dans la synthèse Fischer-Tropsch (diamètre-moyen des pores);

j) mesure de la pression partielle d'eau, comparaison avec la valeur $PpH_2O_{limit}$ et ajustement éventuel de ladite pression partielle dans la section réactionnelle de synthèse Fischer-Tropsch ($PpH_2O_{react}$) de manière à ce que $PpH_2O_{react} < PpH_2O_{limit}$.

L'ajustement de la pression partielle d'eau conformément à ladite étape j) dudit deuxième mode de réalisation préférée de la méthode d'optimisation selon l'invention peut être effectué en utilisant tout moyen connu de l'Homme du métier et notamment un moyen sélectionné parmi les moyens suivants :

10. augmentation du débit de charge,
11. augmentation du taux de recyclage dans lé cas où la section réactionnelle ou l'un des réacteurs de la section réactionnelle est équipé(e) d'un recyclage du gaz non converti,
12. diminution de la température opératoire,
13. diminution de la pression totale,
14. introduction d'un diluant inerte dans la charge de la section réactionnelle Fischer-Tropsch,
15. élimination en continu de tout ou partie de l'eau formée par la réaction.

De manière plus détaillée, l'ajustement de la pression partielle d'eau conformément à ladite étape j) dudit deuxième mode de réalisation préférée de la méthode d'optimisation selon l'invention peut être effectué en utilisant au moins un moyen sélectionné parmi les moyens suivants:

10. L'augmentation du débit de charge fraîche constitué de gaz de synthèse est un des moyens préférés. Il permet de réduire le temps de contact de la charge avec le catalyseur, donc de réduire le taux de conversion de CO par passe, c'est-à-dire le taux de conversion de CO mesuré entre l'entrée et la sortie de la section réactionnelle, et par conséquent de réduire la pression partielle d'eau. En outre, l'augmentation du débit de charge fraîche présente l'avantage d'augmenter la productivité de l'unité de synthèse Fischer-Tropsch.

11. L'augmentation du taux de recyclage du gaz de synthèse non converti dans le cas où la section réactionnelle ou l'un des réacteurs de la section réactionnelle est équipé(e) d'un recyclage interne compte parmi les moyens d'action préférés pour réduire la pression partielle d'eau dans la zone réactionnelle. Ladite augmentation engendre la diminution du taux de conversion de CO par passe et par conséquent la diminution de la pression partielle d'eau dans la section réactionnelle.

12. La diminution de la température opératoire conduit à un ralentissement de la cinétique de la réaction selon la loi d'Arrhenius bien connue de l'Homme du métier. Par conséquent, la diminution de la température provoque une diminution du taux de conversion de CO et donc une diminution de la pression partielle d'eau.

13. La diminution de la pression totale a un effet direct sur les pressions partielles et en particulier sur la pression partielle d'eau. Elle a également un effet sur la cinétique de la réaction, ce qui conduit aussi à une diminution de la pression partielle d'eau par diminution du taux de conversion de CO.

14. L'introduction d'un diluant inerte, de l'azote ou du méthane par exemple, à l'entrée de la section réactionnelle conduit à des conditions cinétiques de synthèse Fischer-Tropsch moins favorables que lorsque la charge est dépourvu de diluant et en conséquence à une diminution de la pression partielle d'eau dans la section réactionnelle. Toutefois, cette option n'est généralement pas l'option préférée car elle est difficile à mettre en oeuvre industriellement (problème de disponibilité de l'inerte par exemple).

15. Une autre méthode d'abaisser la pression partielle d'eau consiste à éliminer en continu l'eau formée par la réaction au moyen d'un dispositif de séparation implanté dans la section réactionnelle ou dans une boucle de recyclage intégrée dans le procédé de synthèse Fischer-Tropsch. Une telle séparation peut par exemple être réalisée au moyen d'un ballon permettant de séparer la phase aqueuse et la phase organique dans une boucle de recyclage ou au moyen d'une membrane implantée dans cette boucle ou dans la section réactionnelle.

Le choix de l'un de ces moyens dépend essentiellement des moyens disponibles sur l'unité industrielle et des conditions opératoires au moment du choix.

Les moyens préférés utilisés à l'étape j) d'ajustement de la pression partielle d'eau dans la section réactionnelle sont l'augmentation du débit de charge, l'augmentation du taux de recyclage du gaz de synthès non converti, dans le cas où la section réactionnelle ou l'un des réacteurs de la section réactionnelle est équipé(e) d'un recyclage interne et la diminution de la température. De manière très préférée, l'ajustement de la pression partielle d'eau est réalisé soit par l'augmentation du débit de charge soit par l'augmentation du taux de recyclage du gaz de synthèse non converti dans le cas où la section réactionnelle ou l'un des réacteurs de ladite section est équipé(e) d'un recyclage interne.

De manière très préférée, ledit premier mode de réalisation préférée de la méthode d'optimisation selon l'invention et ledit deuxième mode de réalisation préférée de la méthode d'optimisation selon l'invention sont effectuées de façon cumulative de sorte qu'on opère dans des conditions telles que la pression partielle en monoxyde de carbone soit supérieure ou égale à 4 bar dans la section réactionnelle, le rapport $P_{H2O}:P_{H2}$ présente une valeur inférieure ou égale à 0,8 et la pression partielle d'eau soit maintenue en deçà d'une valeur critique $PpH_2O_{limit.}$ définie plus haut. De façon préférentielle, les conditions opératoires au sein de la section réactionnelle sont telles que la pression partielle en monoxyde de carbone est supérieure ou égale à 4,5 bar voire supérieure ou égale à 4,8 bar dans la section réactionnelle, le rapport $P_{H2O}:P_{H2}$ présente une valeur inférieure ou égale à 0,8, de préférence inférieure ou égale à 0,75 et de manière encore plus préférée inférieure ou égale à 0,70 et la pression partielle d'eau soit maintenue en deçà d'une valeur critique $ppH_2O_{limit.}$ définie plus haut, de préférence maintenue en en deçà de la valeur $0,95.PpH_2O_{limit,}$ de manière plus préférée, maintenue en deçà de la valeur $0,9.PpH_2O_{limit}$ et de manière encore plus préférée, en deçà de la valeur $0,8.PpH_2O_{limit.}$. Selon un mode de réalisation particulier de l'invention, les conditions opératoires au sein de la section réactionnelle sont telles que la pression partielle en monoxyde de carbone est supérieure ou égale à 4,5 bar, le rapport $P_{H2O}:P_{H2}$ présente une valeur inférieure ou égale à 0,7 et la pression partielle d'eau est maintenue en deçà de la valeur $0,8.ppH_2O_{limit.}$ Ces conditions sont obtenues en jouant sur un ou plusieurs des moyens 1) à 15) décrits plus haut dans la présente description.

Les exemples qui suivent illustrent l'invention.

Exemple 1: Influence de la pression partielle en monoxyde de carbone sur la stabilité du catalyseur

On effectue la réaction de synthèse Fischer-Tropsch dans une section réactionnelle comprenant un réacteur du type parfaitement agité (CSTR en anglais) pouvant être maintenu en pression et en température et pouvant être opéré en continu. On alimente le réacteur par un gaz de synthèse caractérisé par son rapport molaire $H_2/CO$ son taux de composés inertes (% dilution, l'azote étant présent en tant que composé inerte). Le débit de charge formée de gaz de synthèse est contrôlé et peut être également ajusté pour maintenir un niveau de conversion de CO constant. La synthèse Fischer-Tropsch est effectuée à 230°C en présence d'un catalyseur à base de cobalt supporté sur alumine stabilisée, préalablement réduit. Les performances catalytiques sont déterminées à partir de l'analyse chromatographique en phase gazeuse de la charge et de l'effluent gaz et de la mesure des débits des flux gazeux en entrée et sortie de la section réactionnelle. L'activité du catalyseur est déterminée selon l'équation cinétique de type Sarup-Wojciechowski (B. Sarup, B.W. Wojciechowski, Can. J. Chem. Eng. (1989) vol. 67, p. 62-74, I.C. Yates, C.N. Satterfield, Energy & Fuels, (1991) vol. 5, p. 168-173). Plus précisément, l'activité du catalyseur est déterminée par l'équation suivante : $R_{CO} = a \cdot (P_{H2}^{0.5} \cdot P_{CO}^{0.5})/(1+b \cdot P_{CO}^{0.5})^{0.5}$, avec a étant la constante cinétique de la réaction et b un coefficient d'adsorption, les valeurs de a et b étant particulières au catalyseur utilisé.

Plusieurs expériences sont réalisées dans différentes conditions d'alimentation en gaz de synthèse et à différents niveaux de conversion :

- exemple 1.1 (comparatif) : La réaction est effectuée à 230 °C sous 20 bar, taux d'inerte 35 % (%vol), $H_2/CO$ (mol) = 2,14 ; la conversion est maintenue à 60 %.
- exemple 1.2 (comparatif) : La réaction est effectuée à 230 °C sous 20 bar, taux d'inerte 20 % (%vol), $H_2/CO$ (mol) = 2,14 ; la conversion est maintenue à 60 %.
- exemple 1.3 (comparatif) : La réaction est effectuée à 230 °C sous 20 bar, taux d'inerte 26 % (% vol), $H_2/CO$ (mol) = 1,75 ; la conversion est maintenue à 50 %.
- exemple 1.4 (invention) : Cet exemple est effectué en reprenant initialement les conditions opératoires de l'exemple 1.3 pour lequel la pression partielle en CO est inférieure à 4 bar. La pression partielle en CO est ajustée en augmentant la pression totale dans la section réactionnelle à 30 bar. Cette augmentation de la pression totale est réalisée dans un temps qui est considéré comme négligeable par rapport à la durée de l'essai (1000 heures). Le taux de composés inertes, à savoir l'azote, dans la charge (taux de dilution de la charge) a également été augmenté. La pression partielle en CO est ainsi égale à 4,5 bar dans la section réactionnelle.
- exemple 1.5 (invention) : Cet exemple est effectué en reprenant initialement les conditions opératoires de l'exemple 1.3 pour lequel la pression partielle en CO est inférieure à 4 bar. La pression partielle en CO est ajustée en diminuant le taux de composés inertes, à savoir l'azote, dans la charge (dilution de la charge de 26% à 12% vol). Cette dilution est réalisée dans un temps qui est considéré comme négligeable par rapport à la durée de l'essai (1000 heures). Les autres conditions sont restées inchangées par rapport à l'exemple 1.3. La pression partielle en CO est ainsi égale à 4,5 bar dans la section réactionnelle.
- exemple 1.6 (invention) : Cet exemple est effectué en reprenant initialement les conditions opératoires de l'exemple 1.3 pour lequel la pression partielle en CO est inférieure à 4 bar. La pression partielle en CO est ajustée en augmentant la pression totale à 28 bar. Cette augmentation de la pression totale est réalisée dans un temps qui est considéré comme négligeable par rapport à la durée de l'essai (1000 heures). Les autres conditions sont restées inchangées par rapport à l'exemple 1.3. La pression partielle en CO est ainsi égale à 5 bar dans la section réactionnelle.
- exemple 1.7 (invention) : Cet exemple est effectué en reprenant initialement les conditions opératoires de l'exemple 1.3 pour lequel la pression partielle en CO est inférieure à 4 bar. La pression partielle en CO est ajustée en augmentant la pression totale dans la section réactionnelle à 28 bar, en supprimant l'azote dans la charge (taux de dilution nul) et en augmentant de façon conséquente le débit volumique dé la charge (environ d'un facteur 2.8) de façon à réduire le niveau de conversion à 20%. Ces changements sont réalisés dans un temps qui est considéré comme négligeable par rapport à la durée de l'essai (1000 heures). La pression partielle en CO est ainsi égale à 9,4 bar dans la section réactionnelle.

Le tableau 1 ci-dessous reprend l'ensemble des données concernant les exemples 1.1 à 1.7 et indique la pression partielle en CO dans la section réactionnelle ainsi que l'activité du catalyseur mesurée pour chacun de ces exemples.

Tableau 1

| exemples | 1.1 | 1.2 | 1.3 | 1.4 | 1.5 | 1.6 | 1.7 |
|---|---|---|---|---|---|---|---|
| T (°C) | 230 | 230 | 230 | 230 | 230 | 230 | 230 |

(suite)

| exemples | 1.1 | 1.2 | 1.3 | 1.4 | 1.5 | 1.6 | 1.7 |
|---|---|---|---|---|---|---|---|
| P totale dans le réacteur (bar) | 20 | 20 | 20 | 30 | 20 | 28 | 28 |
| H$_2$/CO dans la charge (mol) | 2,14 | 2,14 | 1,75 | 1,75 | 1,75 | 1,75 | 1,75 |
| Taux d'inerte dans la charge (% vol) | 35 | 20 | 26 | 35 | 12 | 26 | 0 |
| Niveau de conversion de CO durant l'essai (%) | 60 | 60 | 50 | 50 | 50 | 50 | 20 |
| PpCO dans le réacteur (bar) | 2,1 | 2,8 | 3,5 | 4,5 | 4,5 | 5,0 | 9,4 |
| Activité mesurée (% unité arbitraire) : initiale (temps = 100 h) au bout de 1 000 h | 100 75 | 100 89 | 100 95 | 100 98 | 100 98 | 100 98 | 100 98,5 |
| Activité résiduelle au bout de 1 000 h (%) | 75 | 89 | 95 | 98 | 98 | 98 | 98,5 |

La comparaison des exemples 1.1 à 1.7 montre que les meilleures performances en terme d'activité du catalyseur sont obtenues lorsque la pression partielle en CO est supérieure à 4 bar. L'activité résiduelle étant sensiblement améliorée lorsque la pression partielle en CO est supérieure à 4 bar, il en résulte une bien meilleure stabilité du catalyseur mis en oeuvre dans les conditions de l'invention. La méthode d'optimisation selon l'invention conduit donc à une durée de vie améliorée du catalyseur Fischer-Tropsch, d'où une diminution de fréquence de remplacement du catalyseur.

Exemple 2 : Influence de la pression partielle en CO, de la pression partielle d'eau et du rapport $P_{H2O}$:$P_{H2}$ sur la stabilité du catalyseur.

On effectue la réaction de synthèse Fischer-Tropsch dans une section réactionnelle comprenant un réacteur de type parfaitement agité (CSTR en anglais) pouvant être maintenu en pression et eh température et pouvant être opéré en continu. On alimente le réacteur par un gaz de synthèse caractérisé par son rapport molaire H$_2$/CO et son taux de composés inertes (% dilution, l'azote étant présent en tant que composé inerte). Le débit de charge formée de gaz de synthèse est contrôlé et peut être également ajusté pour maintenir un niveau de conversion de CO constant. La synthèse Fischer-Tropsch est effectuée à 230 °C en présence d'un catalyseur à base de cobalt supporté sur alumine stabilisée, préalablement réduit.

Les performances catalytiques sont déterminées à partir de l'analyse chromatographique en phase gazeuse de la charge et de l'effluent gaz et de la mesure des débits des flux gazeux en entrée et sortie de la section réactionnelle. L'activité du catalyseur est déterminée selon l'équation cinétique de type Sarup-Wojciechowski (B. Sarup, B.W. Wojciechowski, Can. J. Chem. Eng. (1989) vol. 67, p. 62-74, I.C. Yates, C.N. Satterfield, Energy & Fuels, (1991) vol. 5, p. 168-173). Plus précisément, l'activité du catalyseur est déterminée par l'équation suivante : $R_{CO} = a \cdot (P_{H2}^{0.5} \cdot P_{CO}^{0.5}) / (1 + b \cdot P_{CO}^{0.5})^{0.5}$, avec a étant la constante cinétique de la réaction et b un coefficient d'adsorption, les valeurs de a et b étant particulières au catalyseur utilisé.

Plusieurs expériences sont réalisées dans différentes conditions d'alimentation en gaz de synthèse et à différents niveaux de conversion :

- exemple 2.1 (comparatif) : La réaction est effectuée à 230 °C sous 20 bar, taux d'inerte 20 % (% vol), H$_2$/CO (mol) = 2.14 ; la conversion est maintenue à 60 %.
- exemple 2.2 (comparatif): La réaction est effectuée à 230 °C sous 20 bar, taux d'inerte 26 % (% vol), H$_2$/CO (mol) = 1.75 ; la conversion est maintenue à 55 %.
- exemple 2.3 (comparatif) : La réaction est effectuée à 230 °C sous 20 bar, taux d'inerte 26 % (% vol), H$_2$/CO (mol) = 1.75 ; la conversion est maintenue à 50 %.
- exemple 2.4 (comparatif) : La réaction est effectuée à 230 °C sous 30 bar, taux d'inerte 26 % (% vol), H$_2$/CO (molaire) = 1.75 ; la conversion est maintenue à 60 %.
- exemple 2.5 (invention) : Cet exemple est effectué en reprenant initialement les conditions opératoires de l'exemple 2.3 pour lequel la pression partielle en CO est inférieure à 4 bar. La pression partielle en CO est ajustée en augmentant la pression totale dans la section réactionnelle à 30 bar et le taux de composés inertes a été augmenté de manière à ce que la pression partielle d'eau soit en deçà de PpH2O$_{limit}$ (égale à 6 bar). Les autres conditions sont restées inchangées par rapport à l'exemple 2.3. La pression partielle en CO dans la section réactionnelle est ainsi égale à 4,5 bar et la pression partielle d'eau est égale à 4,4 bar.

La valeur critique de $PpH2O_{limit}$ est calculée à partir des données suivantes : T = 503 K ; Dp = 10 nm ; Ps(503K) = 28 bar. Le calcul de $PpH2O_{limit}$ à partir de la formule [1] donnée plus haut dans la présente description ($PpH_2O_{limit}$.= exp $(-7751/d_p.T).P_s(T)$) conduit à une valeur égale à 6 bar.

Le tableau 2 ci-dessous reprend l'ensemble des données concernant les exemples 2.1 à 2.5 et indique la pression partielle en CO, la pression partielle d'eau et le rapport $Pp_{H2O}/Pp_{H2}$ dans la section réactionnelle ainsi que l'activité du catalyseur mesurée pour chacun de ces exemples.

Tableau 2

| exemple | 2.1 | 2.2 | 2.3 | 2.4 | 2.5 |
|---|---|---|---|---|---|
| T (°C) | 230 | 230 | 230 | 230 | 230 |
| P totale dans le réacteur (bar) | 20 | 20 | 20 | 30 | 30 |
| H2/CO dans la charge (mol) | 2,14 | 1,75 | 1,75 | 1,75 | 1,75 |
| Taux d'inerte dans la charge (% vol) | 20 | 26 | 26 | 26 | 35 |
| Niveau de conversion de CO durant l'essai (%) | 60 | 55 | 50 | 60 | 50 |
| PpCO dans le réacteur (bar) | 2,8 | 3,3 | 3,5 | 4,6 | 4,5 |
| PpH2O dans le réacteur (bar) | 4,1 | 3,9 | 3,5 | 6,7 | 4,4 |
| PpH2O/PpH2 | 0,7 | 0,9 | 0,7 | 1,2 | 0.7 |
| Activité mesurée (% unité arbitraire) : initiale (temps = 100 h) au bout de 1 000 h | 100 89 | 100 82 | 100 95 | 100 75 | 100 98 |
| Activité résiduelle au bout de 1000 h (%) | 89 | 82 | 95 | 75 | 98 |

La comparaison des exemples 2.1 à 2.5 montre que la meilleure performance en terme de stabilité du catalyseur est obtenue lorsque la pression partielle en CO est supérieure à 4 bar, la pression partielle d'eau est inférieure à la valeur critique $PpH2O_{limit}$, égale à 6 bar dans le cas présent, et le rapport $Pp_{H2O}/Pp_{H2}$ inférieure ou égale à 0,7.

**Revendications**

1.  Méthode pour optimiser le fonctionnement d'une section réactionnelle de synthèse d'hydrocarbures, mise en oeuvre sous une pression totale comprise entre 1 MPa et 10 MPa, à partir d'une charge comprenant du gaz de synthèse, ledit gaz de synthèse présentant un rapport molaire H2:CO compris entre 1:2 et 5:1, dans laquelle on opère en présence d'au moins un catalyseur comprenant du cobalt, ladite méthode comprenant les étapes suivantes

    a) Détermination de la pression partielle en monoxyde de carbone théorique dans la section réactionnelle,
    b) Ajustement éventuel de la pression partielle en CO déterminée à l'étape a) à une valeur supérieure ou égale à 4 bar à l'aide d'au moins un moyen sélectionné parmi les moyens suivants :

       1) l'augmentation de la pression totale dans ladite section réactionnelle,
       2) l'augmentation de la concentration en CO dans la charge, selon l'un et/ou l'autre des moyens 2.1) et 2.2) suivants :

          2.1) diminution des composés inertes dans la charge
          2.2) diminution du rapport molaire $H_2$/CO de la charge

       3) diminution du taux de conversion de CO,

    c) Détermination de la nouvelle valeur de la pression partielle en CO théorique dans la section réactionnelle pour s'assurer qu'elle a atteint une valeur supérieure ou égale à 4 bar.

2.  Méthode selon la revendication 1 tel que la pression partielle en CO théorique à l'issue de ladite étape c) est supérieure ou égale à 4,5 bar.

**3.** Méthode selon la revendication 1 tel que la pression partielle en CO théorique à l'issue de ladite étape c) est supérieure ou égale à 4,8 bar.

**4.** Méthode selon l'une des revendications 1 à 3 tel que l'ajustement de la pression partielle en CO selon ladite étape b) est réalisé par l'augmentation de la pression totale dans la section réactionnelle de synthèse Fischer-Tropsch ou par diminution des composés inertes dans la charge de manière à augmenter la concentration en CO dans la charge.

**5.** Méthode selon l'une des revendications 1 à 4 tel que la pression partielle en CO théorique est déterminée selon ladite étape a) à partir de la composition molaire de la phase gazeuse dans ladite section réactionnelle et de la pression totale au sein de ladite section réactionnelle.

**6.** Méthode selon l'une des revendications 1 à 5 tel qu'elle comprend les étapes de contrôle suivantes :

e) Détermination du rapport $P_{H2O}$:$P_{H2}$ théorique dans la section réactionnelle,
f) Ajustement éventuel du rapport $P_{H2O}$:$P_{H2}$ déterminé à l'étape e) à une valeur inférieure ou égale à 0,8,
g) Détermination de la nouvelle valeur du rapport $P_{H2O}$:$P_{H2}$ théorique dans la section réactionnelle pour contrôler que ledit rapport présente une valeur inférieure ou égale à 0,8.

**7.** Méthode selon la revendication 6 tel que l'ajustement éventuel du rapport $P_{H2O}$:$P_{H2}$ selon ladite étape f) est effectué à l'aide d'au moins un moyen sélectionné parmi les moyens suivants :

4) augmentation du débit de charge,
5) augmentation du taux de recyclage dans le cas où la section réactionnelle ou au moins un réacteur de la section réactionnelle est équipé d'un recyclage du gaz de synthèse non converti,
6) élimination en continu de tout ou partie de l'eau formée par la réaction de synthèse Fischer-Tropsch,
7) modification du rapport $H_2$/CO en entrée de la section réactionnelle de synthèse d'hydrocarbure ou d'au moins un réacteur de ladite section lorsqu'elle en compte plusieurs,
8) diminution de la température opératoire,
9) diminution de la pression totale.

**8.** Méthode selon la revendication 6 ou 7 tel que la nouvelle valeur du rapport des pressions partielles d'eau et d'hydrogène $P_{H2O}$:$P_{H2}$ présente, à l'issue de ladite étape g), une valeur inférieure ou égale à 0,7.

**9.** Méthode selon l'une des revendications 1 à 8 tel qu'on contrôle la pression partielle d'eau dans ladite section réactionnelle pour la maintenir en deçà d'une valeur critique $PpH_2O_{limit.}$ définie par la formule [1] :

$$PpH_2O_{limit.} = \exp(-7751/d_p.T).P_s(T) \qquad [1]$$

où T est la température de réaction en K,
$d_p$ est le diamètre moyen des pores du catalyseur en nm, déterminé par adsorption-désorption d'azote,
$P_s(T)$ est la pression de vapeur saturante de l'eau à la température T, en bar

**10.** Méthode selon la revendication 9 telle que la pression partielle d'eau est contrôlée en mettant en oeuvre au moins les étapes suivantes :

i) détermination de la valeur $PpH_2O_{limit}$ définie à partir de la formule [1], dans les conditions de réaction,
j) mesure de la pression partielle d'eau, comparaison avec la valeur $PpH_2O_{limit}$ et ajustement éventuel de ladite pression partielle dans la section réactionnelle de synthèse Fischer-Tropsch ($PpH_2O_{react}$) de manière à ce que $PpH_2O_{react} < PpH_2O_{limit}$, ledit ajustement étant effectué à l'aide d'au moins un moyen sélectionné parmi les moyens suivants :

10. augmentation du débit de charge,
11. augmentation du taux de recyclage dans le cas où la section réactionnelle ou l'un des réacteurs de la section réactionnelle est équipé(e) d'un recyclage du gaz non converti,
12. diminution de la température opératoire,

13. diminution de la pression totale,
14. introduction d'un diluant inerte dans la charge de la section réactionnelle Fischer-Tropsch,
15. élimination en continu de tout ou partie de l'eau formée par la réaction.

**11.** Méthode selon la revendication 9 ou 10 telle que la pression partielle d'eau dans ladite section réactionnelle est maintenue en deçà de la valeur $0,8.PpH_2O_{limit}$.

**12.** Méthode selon l'une des revendications 9 à 11 telle que la pression partielle d'eau dans la section réactionnelle est strictement inférieure à la pression partielle d'hydrogène.

**13.** Méthode selon l'une des revendications 1 à 12 telle qu'on opère dans des conditions telles que la pression partielle en monoxyde de carbone soit supérieure ou égale à 4 bar dans la section réactionnelle, le rapport $P_{H2O}:P_{H2}$ présente une valeur inférieure ou égale à 0,8 et la pression partielle d'eau soit maintenue en deçà d'une valeur critique $ppH_2O_{limit}$. définie à partir de ladite formule [1].

**14.** Méthode selon l'une des revendications 1 à 13 telle que ladite section réactionnelle est munie d'au moins un catalyseur comprenant du cobalt mis en oeuvre soit en lit fixe soit dans un réacteur triphasique soit encore dans un réacteur parfaitement agité.

**Patentansprüche**

**1.** Verfahren zur Optimierung des Betriebs einer Reaktionseinheit zur Synthese von Kohlenwasserstoffen, das unter einem Gesamtdruck im Bereich zwischen 1 MPa und 10 MPa durchgeführt wird, ausgehend von einer Beschickung, die Synthesegas umfasst, wobei das Synthesegas ein $H_2$:CO-Molverhältnis im Bereich zwischen 1:2 und 5:1 aufweist, wobei in Gegenwart mindestens eines Katalysators gearbeitet wird, der Cobalt umfasst, wobei das Verfahren die folgenden Schritte umfasst:

a) Bestimmen des theoretischen Kohlenmonoxidpartialdrucks in der Reaktionseinheit,
b) gegebenenfalls Anpassen des in Schritt a) bestimmten CO-Partialdrucks auf einen Wert größer oder gleich 4 bar mithilfe mindestens eines Mittels, ausgewählt aus den folgenden Mitteln:

1) Erhöhen des Gesamtdrucks in der Reaktionseinheit,
2) Erhöhen der CO-Konzentration in der Beschickung gemäß einem der beiden und/oder der beiden folgenden Mittel 2.1) und 2.2):

2.1) Verringern der inerten Verbindungen in der Beschickung,
2.2) Verringern des $H_2$/CO-Molverhältnisses der Beschickung,

3) Verringern der CO-Umwandlungsrate,

c) Bestimmen des neuen Werts des theoretischen CO-Partialdrucks in der Reaktionseinheit, um sicherzustellen, dass er einen Wert größer oder gleich 4 bar erreicht hat.

**2.** Verfahren nach Anspruch 1, wobei der theoretische CO-Partialdruck am Ende von Schritt c) größer oder gleich 4,5 bar ist.

**3.** Verfahren nach Anspruch 1, wobei der theoretische CO-Partialdruck am Ende von Schritt c) größer oder gleich 4,8 bar ist.

**4.** Verfahren nach einem der Ansprüche 1 bis 3, wobei die Anpassung des CO-Partialdrucks gemäß Schritt b) durch die Erhöhung des Gesamtdrucks in der Reaktionseinheit zur Fischer-Tropsch-Synthese oder durch Verringerung der inerten Verbindungen in der Beschickung durchgeführt wird, um die CO-Konzentration in der Beschickung zu erhöhen.

**5.** Verfahren nach einem der Ansprüche 1 bis 4, wobei der theoretische CO-Partialdruck gemäß Schritt a) ausgehend von der molaren Zusammensetzung der Gasphase in der Reaktionseinheit und dem Gesamtdruck innerhalb der Reaktionseinheit bestimmt wird.

6. Verfahren nach einem der Ansprüche 1 bis 5, wobei es die folgenden Kontrollschritte umfasst:

e) Bestimmen des theoretischen $P_{H2O}:P_{H2}$-Verhältnisses in der Reaktionseinheit,
f) gegebenenfalls Anpassen des in Schritt e) bestimmten $P_{H2O}:P_{H2}$-Verhältnisses auf einen Wert kleiner oder gleich 0,8,
g) Bestimmen des neuen Werts des theoretischen $P_{H2O}:P_{H2}$-Verhältnisses in der Reaktionseinheit, um zu kontrollieren, dass das Verhältnis einen Wert kleiner oder gleich 0,8 aufweist.

7. Verfahren nach Anspruch 6, wobei das gegebenenfalls erforderliche Anpassen des $P_{H2O}:P_{H2}$-Verhältnisses gemäß Schritt f) mithilfe mindestens eines Mittels, ausgewählt aus den folgenden Mitteln, durchgeführt wird:

4) Erhöhen der Durchflussrate der Beschickung,
5) Erhöhen der Rückführungsrate, falls die Reaktionseinheit oder mindestens ein Reaktor der Reaktionseinheit mit einer Rückführung des nicht umgewandelten Synthesegases ausgestattet ist,
6) Kontinuierliches Entfernen des gesamten oder eines Teils des Wassers, das durch die Fischer-Tropsch-Synthesereaktion gebildet wurde,
7) Verändern des $H_2$/CO-Verhältnisses am Einlass der Reaktionseinheit zur Kohlenwasserstoffsynthese oder mindestens eines Reaktors der Einheit, wenn die Einheit mehrere davon aufweist,
8) Verringern der Betriebstemperatur,
9) Verringern des Gesamtdrucks.

8. Verfahren nach Anspruch 6 oder 7, wobei der neue Wert des Verhältnisses der Wasser- und Wasserstoffpartialdrücke $P_{H2O}:P_{H2}$ am Ende des Schritts g) einen Wert kleiner oder gleich 0,7 aufweist.

9. Verfahren nach einem der Ansprüche 1 bis 8, wobei der Wasserpartialdruck in der Reaktionseinheit kontrolliert wird, um ihn unterhalb eines kritischen Werts $PpH_2O_{limit}$ zu halten, der durch die folgende Formel [1] definiert ist:

$$PpH_2O_{limit} = \exp\ (-7751/d_p.T).P_s(T) \qquad [1]$$

worin T für die Reaktionstemperatur in K steht,
$d_p$ für den mittleren Porendurchmesser des Katalysators in nm, bestimmt mittels Stickstoffadsorption/-desorption, steht,
$P_s(T)$ für den Sättigungsdampfdruck des Wassers bei der Temperatur T in bar steht,

10. Verfahren nach Anspruch 9, wobei der Wasserpartialdruck kontrolliert wird, indem mindestens die folgenden Schritte durchgeführt werden:

i) Bestimmen des Werts $PpH_2O_{limit}$, der ausgehend von der Formel [1] definiert wurde, unter den Reaktionsbedingungen,
j) Messen des Wasserpartialdrucks, Vergleichen mit dem Wert $PpH_2O_{limit}$ und gegebenenfalls Anpassen des Partialdrucks in der Reaktionseinheit zur Fischer-Tropsch-Synthese ($PpH_2O_{react}$), damit $PpH_2O_{react} < PpH_2O_{limit}$ ist, wobei die Anpassung mithilfe mindestens eines Mittels, ausgewählt aus den folgenden Mitteln, durchgeführt wird:

10. Erhöhen der Durchflussrate der Beschickung,
11. Erhöhen der Rückführungsrate, falls die Reaktionseinheit oder einer der Reaktoren der Reaktionseinheit mit einer Rückführung des nicht umgewandelten Gases ausgestattet ist,
12. Verringern der Betriebstemperatur,
13. Verringern des Gesamtdrucks,
14. Einführen eines inerten Verdünnungsmittels in die Beschickung der Fischer-Tropsch-Reaktionseinheit,
15. kontinuierliches Entfernen des gesamten oder eines Teils des Wassers, das durch die Reaktion gebildet wurde.

11. Verfahren nach Anspruch 9 oder 10, wobei der Wasserpartialdruck in der Reaktionseinheit unterhalb des Werts $0,8.PpH_2O_{limit}$ gehalten wird.

**12.** Verfahren nach einem der Ansprüche 9 bis 11, wobei der Wasserpartialdruck in der Reaktionseinheit strikt unterhalb des Wasserstoffpartialdrucks liegt.

**13.** Verfahren nach einem der Ansprüche 1 bis 12, wobei unter Bedingungen gearbeitet wird, unter denen der Kohlenmonoxidpartialdruck in der Reaktionseinheit größer oder gleich 4 Bar ist, wobei das $P_{H2O}:P_{H2}$-Verhältnis einen Wert kleiner oder gleich 0,8 aufweist und der Wasserpartialdruck unterhalb eines kritischen Werts $PpH_2O_{limit}$ gehalten wird, der ausgehend von Formel [1] definiert wird.

**14.** Verfahren nach einem der Ansprüche 1 bis 13, wobei die Reaktionseinheit mit mindestens einem Katalysator versehen ist, der Cobalt umfasst, der entweder im Festbett oder in einem Dreiphasenreaktor oder auch in einem perfekt durchmischten Reaktor eingesetzt wird.

**Claims**

**1.** A method for optimizing the operation of a reaction section for the synthesis of hydrocarbons, carried out at a total pressure in the range of 1 MPa to 10 MPa, from a feed comprising synthesis gas, said synthesis gas having a H2:CO molar ratio in the range of 1:2 to 5:1, which is operated in the presence of a catalyst comprising cobalt, said method comprising the following steps:

a) determining the theoretical partial pressure of CO in the reaction section;
b) optionally, adjusting the partial pressure of CO determined in step a) to a value of 4 bar or higher employing at least one means selected from the following means:

1) increasing the total pressure in said reaction section;
2) increasing the concentration of CO in the feed employing one and/or the other of the following means 2.1) and 2.2):

2.1) reducing the inert compounds in the feed;
2.2) reducing the $H_2/CO$ molar ratio in the feed;

3) reducing the degree of CO conversion;

c) determining a new value for the theoretical partial pressure of CO in the reaction section to ensure that it reaches a value of 4 bar or higher.

**2.** A method according to claim 1, in which the theoretical partial pressure of CO at the end of step c) is 4.5 bar or higher.

**3.** A method according to claim 1, in which the theoretical partial pressure of CO at the end of step c) is 4.8 bar or higher.

**4.** A method according to one of claims 1 to 3, in which the adjustment of the partial pressure of CO in accordance with said step b) is carried out by increasing the total pressure in the Fischer-Tropsch synthesis reaction section or by reducing the inert compounds in the feed in order to increase the concentration of CO in the feed.

**5.** A method according to one of claims 1 to 4, in which the theoretical partial pressure of CO is determined in accordance with said step a) from the molar composition of the gas phase in said reaction section and from the total pressure within said reaction section.

**6.** A method according to one of claims 1 to 5, which comprises the following control steps:

e) determining the theoretical molar ratio, $P_{H2O}:P_{H2}$, in the reaction section;
f) optionally, adjusting the ratio $P_{H2O}:P_{H2}$ determined in step e) to a value of 0.8 or lower;
g) determining the new value for the theoretical ratio $P_{H2O}:P_{H2}$ in the reaction section to check that said ratio has a value of 0.8 or lower.

**7.** A method according to claim 6, in which the optional adjustment of the ratio $P_{H2O}:P_{H2}$ in said step f) is carried out using at least one means selected from the following means:

4) increasing the feed flow rate;

5) in the case in which the reaction section or at least one reactor of the reaction section is equipped with a recycle for unconverted synthesis gas, increasing the recycle ratio;

6) continuously eliminating all or part of the water formed by the Fischer-Tropsch synthesis reaction;

7) modifying the ratio $H_2/CO$ at the inlet to the reaction section for hydrocarbon synthesis or at least one reactor of said section when there is a plurality;

8) reducing the operating temperature;

9) reducing the total pressure.

8. A method according to claim 6 or claim 7, in which at the end of said step g), the new value of the ratio of the partial pressure of water and of hydrogen, $P_{H2O}:P_{H2}$, has a value of 0.7 or lower.

9. A method according to one of claims 1 to 8, in which the partial pressure of water in said reaction section is controlled in order to maintain it above a critical value $PpH_2O_{limit}$ defined by the following formula [1]:

$$PpH_2O_{limit} = \exp(-7751/d_p.T).P_s(T) \qquad [1]$$

where T is the reaction temperature in K;

$d_p$ is the mean pore diameter of the catalyst in nm, determined by nitrogen adsorption-desorption;

$P_s(T)$ is the saturated vapour pressure of water at the temperature T, in bar.

10. A method according to claim 9, in which the partial pressure of water is controlled by carrying out at least the following steps:

i) determining the value $PpH_2O_{limit}$ defined in formula [1] under the reaction conditions;

j) measuring the partial pressure of water, comparison with the value $PpH_2O_{limit}$ and if necessary adjusting said partial pressure in the Fischer-Tropsch synthesis reaction section ($PpH_2O_{react}$) so that $PpH_2O_{react} < PpH_2O_{limit}$, said adjustment being carried out with the aid of at least one means selected from the following means:

10. increasing the feed flow rate;

11. in the case in which the reaction section or one of the reactors of the reaction section is equipped with a recycle for unconverted gas, increasing the recycle ratio;

12. reducing the operating temperature;

13. reducing the total pressure;

14. introducing an inert diluent into the feed for the Fischer-Tropsch reaction section;

15. continuously eliminating all or part of the water formed by the reaction.

11. A method according to claim 9 or claim 10, in which the partial pressure of water in said reaction section is maintained below the value 0.8 $PpH_2O_{limit}$.

12. A method according to one of claims 9 to 11, in which the partial pressure of water in the reaction section is strictly lower than the partial pressure of hydrogen.

13. A method according to one of claims 1 to 12, operated under conditions such that the partial pressure of carbon monoxide is 4 bar or higher in the reaction section, the ratio $P_{H2O}:P_{H2}$ has a value of 0.8 or lower and the partial pressure of water is maintained below a critical value $PpH_2O_{limit}$ defined from said formula [1].

14. A method according to one of claims 1 to 13, in which said reaction section is provided with at least one catalyst comprising cobalt employed either in fixed bed, or in a three-phase reactor or in a continuously stirred reactor.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1406988 B
- EP 0313375 A
- EP 1233011 A
- WO 03068715 A
- US 6262132 B
- WO 9942214 A
- WO 03012008 A

**Littérature non-brevet citée dans la description**

- **B.H. DAVIS.** *Catalysis Today,* 2003, vol. 84, 83
- **H. SCHULZ et al.** *Catal. Today,* 2002, vol. 71, 351-360
- **A. BRUMBY et al.** *Catal. Today,* 2005, vol. 106, 166-169
- **P.J. VAN BERGE et al.** *Catal. Today,* 2000, vol. 58, 321-334
- **A.M. HILMEN et al.** *Appl. Catal.,* 1999, vol. 186, 169-188
- **BARRETT ; JOYMER ; HALENDA.** *The Journal of American Society,* 1951, vol. 73, 373
- **B. SARUP ; B.W. WOJCIECHOWSKI.** *Can. J. Chem. Eng.,* 1989, vol. 67, 62-74
- **I.C. YATES ; C.N. SATTERFIELD.** *Energy & Fuels,* 1991, vol. 5, 168-173